# EUROPÄISCHE PATENTSCHRIFT

(11) **EP 0 561 230 B1**
(45) Veröffentlichungstag und Bekanntmachung des Hinweises auf die Patenterteilung: **29.05.1996**
(21) Anmeldenummer: 93103460.7
(22) Anmeldetag: 04.03.1993
(51) Int. Cl.: C08F 8/32

(54) **Polymethacrylimide mit hoher Wärmeformbeständigkeit**
Polymethacrylimide with high heat distortion resistance
Polyméthacrylimide à stabilité dimensionnelle à chaud plus élevée

(30) Priorität: 20.03.1992 DE 4208994
(43) Veröffentlichungstag der Anmeldung: 22.09.1993
(73) Patentinhaber: BASF Aktiengesellschaft, D-67063 Ludwigshafen (DE)
(72) Erfinder: Besecke, Siegmund, Dr., p. Adr. Erich Besecke, W-3250 Hameln (DE); Deckers, Andreas, Dr., W-6700 Ludwigshafen (DE); Lauke, Harald, Dr., W-6800 Mannheim 1 (DE)

(56) Entgegenhaltungen:
- EP-A- 0 083 040
- EP-A- 0 291 662
- FR-A- 2 381 067
- US-A- 4 889 948
- Handbuch Chemie, Physik und Technologie der Kunststoffe, Band 9, Seite 365 ff.

## Beschreibung

Die vorliegende Erfindung betrifft Copolymerisate, erhältlich durch
(1) Copolymerisation eines Monomerengemisches aus
   (A) 1 bis 99 Gew.-% mindestens eines Monomeren der allgemeinen Formel I

      CH₂=C(E)CH₂-O-CH₂C(F)=CH₂ I

      in der E und F ausgewählt sind aus der Gruppe aus -COOR¹, -COR¹, -CONRR³ und -CN, und R¹, R und R³ folgende Bedeutung haben:
      - R¹ =: H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, Hydroxy-C₁-C₅-alkyl, Amino-C₁-C₅-alkyl, N-C₁-C₄-Alkyl-amino-C₁-C₅-alkyl, N,N-Di-(C1-C4-Alkyl)-amino-C₁-C₅-alkyl, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
      - R, R³ =: H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
   (B) 99 bis 1 Gew.-% mindestens einer Verbindung ausgewählt aus der Gruppe bestehend aus Acryl- und Methacrylsäure und C₁-C₂₀-Alkyl- und C₅-C₁₂-Cycloalkylester der Acryl- und Methacrylsäure
      und
   (C) 0 bis 98 Gew.-% mindestens eines weiteren, von A) und B) verschiedenen radikalisch polymerisierbaren Monomeren
      und
(2) Umsetzung dieser Copolymerisate mit einer Verbindung der allgemeinen Formel II

   R⁴NH₂ II

   in der R⁴ Wasserstoff, C₁-C₂₂-Alkyl, C₅-C₈-Cycloalkyl, C₆-C₁₀-Aryl oder C₆-C₁₀-Aryl-C₁-C₄-alkyl bedeutet, wobei diese Reste, mit Ausnahme von Wasserstoff und der C₁-C₂₂-Alkyl-Reste, bis zu dreifach mit Resten, ausgewählt aus der Gruppe bestehend aus C₁-C₄-Alkyl, C₁-C₄-Alkoxy und Halogen, substituiert sein können, oder Mischungen davon, wobei das Gewichts verhältnis der Copolymerisate (1) zu den Verbindungen (2) im Bereich von 1:1 bis 400:1 liegt.

Weiterhin betrifft die Erfindung ein Verfahren zur Herstellung dieser Copolymerisate, deren Verwendung zur Herstellung von Formkörpern, Folien oder Fasern, sowie Formkörper, Folien oder Fasern aus diesen Polymerisaten.

Eine bekannte Methode zur Verbesserung der Wärmeformbeständigkeit von thermoplastischen Formmassen auf Basis von Polymethylmethacrylat ("PMMA"), was sich beispielsweise in einer Erhöhung der Glasübergangstemperatur äußert, besteht darin, daß man Methylmethacrylat ("MMA") mit beispielsweise alpha-Methylstyrol, Maleinsäureanhydrid, am Stickstoffatom substituierten Methacrylsäureamiden oder Oxadimethacrylverbindungen copolymerisiert.

So werden in der US-A 4,889,948 Copolymere aus vinylischen Monomeren wie Methylmethacrylat und Oxadimethacrylaten der allgemeinen Formel I'

CH₂=C(COOZ)CH₂-O-CH₂C(COOZ)=CH₂ I'

in der Z = H, Me, Et, n-Butyl, i-Butyl, tert.-Butyl, Neopentyl, Benzyl, Phenethyl, Trimethylcyclohexyl und Tetrahydrofurfuryl bedeutet, beschrieben. Nachteilig ist, daß das durch Massepolymerisation von 3,5 Gew.-% Oxadimethylmethacrylat und 96,5 Gew.-% Methylmethacrylat hergestellte hochvernetzte Copolymere nicht schmelzbar und unlöslich, d.h. technisch nicht verwertbar ist.

Eine weitere Möglichkeit, die Glasübergangstemperatur von thermoplastischen Formmassen auf PMMA-Basis zu erhöhen, ist die polyme-ranaloge Umsetzung von PMMA mit primären Aminen (Imidierung) unter Ausbildung von Glutarimidstrukturen wie der folgenden

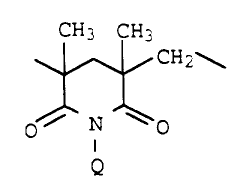

Die Glasübergangstemperatur solcher imidierter PMMA-Formmassen ist sowohl vom Anteil der Glutarimideinheiten (Imidierungsgrad) im Polymeren als auch vom Substituenten Q am Imidstickstoffatom abhängig (Chemie, Physik und Technologie der Kunststoffe, Bd. 9, Acryl- und Methacrylverbindungen, Springerverlag 1967, S. 365ff).

Bei der vollständigen Imidierung von PMMA kann man für Q = Wasserstoff sehr hohe Glasübergangstemperaturen erzielen. Jedoch erhöht sich nachteilig die Wasseraufnahme und die Fließfähigkeit solcher Formmassen wird zu stark erniedrigt. Durch andere Reste Q wie Methyl oder Cyclohexyl kann man zwar diese Nachteile überwinden, allerdings geht dies zu Lasten der Wärmeformbeständigkeit. Durch aromatische Reste Q wie Phenyl kann man zwar hohe Glasübergangstemperaturen erzielen. Nachteilig wirken sich aber hierbei eine zu geringe Witterungsstabilität und eine erhöhte Spannungsrißkorrosion aus.

In der US-A 4,246,374 wird ein Verfahren zur Umsetzung verschiedener Copolymerisate, erhältlich durch Copolymerisation von MMA mit Comonomeren wie Styrol, alpha-Methylstyrol, (Meth)Acrylnitril, Maleinsäureanhydrid, N-Alkyl-Maleinimid, Ethylen und Propylen, mit Aminen auf einem Extruder (Schmelzeprozeß) beschrieben. Die so hergestellten imidierten Copolymerisate weisen jedoch keine ausreichend hohen Wärmeformbeständigkeiten auf.

Aufgabe der vorliegenden Erfindung war es, transparente, thermoplastisch verarbeitbare Formmassen mit hoher Wärmeformbeständigkeit und guter Bewitterungsstabilität bereitzustellen.

Demgemäß wurden die eingangs definierten Copolymerisate gefunden.

Außerdem wurden ein Verfahren zur Herstellung dieser Copolymerisate, deren Verwendung zur Herstellung von Formkörpern, Folien und Fasern sowie daraus hergestellte Formkörper, Folien und Fasern gefunden.

Als Komponente A) setzt man erfindungsgemäß 1 bis 99 Gew.-%, bevorzugt 5 bis 50 Gew.-%, mindestens eines Monomeren I ein. Bevorzugt weist dabei das einzusetzende Monomere eine Reinheit von mindestens 98%, besonders bevorzugt mindestens 99%, auf.

Als Substituenten der als Oxadimethacrylate zu bezeichnenden Monomeren I kommen bevorzugt folgende Reste in Betracht:
- R¹: Wasserstoff;
C₁-C₁₈-Alkyl, darunter vorzugsweise C₁-C₁₂-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl und Stearyl, besonders bevorzugt C₁-C₄-Alkyl wie Methyl, Ethyl, n-Propyl, i-Propyl, n-Butyl, i-Butyl, sek.-Butyl, tert.-Butyl;
C₃-C₈-Cycloalkyl wie Cyclopropyl, Cyclopentyl, Cyclohexyl, Cycloheptyl, Cyclooctyl, 4-Methylcyclohexyl, 4-Methoxy-cyclohexyl, 2,4,6-Trimethylcyclohexyl;
C₃-C₈-Cycloalkyl-C₁-C₅-alkyl wie Cyclopropylmethyl, Cyclopentylmethyl, Cyclohexylmethyl, Cyclopropylethyl, Cyclopentylethyl, Cyclohexylethyl, Cyclopropylpropyl, Cyclopentylpropyl, Cyclohexylpropyl, Cyclopentylbutyl, Cyclohexylbutyl, Cyclopentylpentyl, Cyclohexylpentyl, Cyclooctylpentyl;
Hydroxy-C₁-C₅-alkyl wie Hydroxymethyl, 2-Hydroxyethyl, 2-Hydroxypropyl, 3-Hydroxypropyl, 4-Hydroxybutyl, 5-Hydroxypentyl, 2,2-Dimethyl-3-hydroxypropyl;
Amino-C₁-C₅-alkyl wie Aminomethyl, 2-Aminoethyl, 3-Aminopropyl, 4-Aminobutyl, 5-Aminopentyl;
N-C₁-C₄-Alkyl-amino-C₁-C₅-alkyl wie N-Methylamino-methyl, 2-(N-Methylamino)ethyl, 3-(N-Methylamino)propyl, 4-(N-Methylamino)butyl, 5-(N-Methylamino)pentyl, N-Ethylaminomethyl, N-n-Propylaminomethyl, N-n-Butylaminomethyl;
N,N-Di-(C₁-C₄-Alkyl)amino-C₁-C₅-alkyl wie N,N-Dimethylaminomethyl, 2-(N,N-Dimethylamino) ethyl, 3-(N,N-Dimethylamino)propyl, 4-(N,N-Dimethylamino)butyl, 5-(N,N-(N-Methylamino)butyl, N,N-Diethylaminomethyl, N,N-Di(n-Propyl)aminomethyl, N,N-Di(i-Propyl)aminomethyl, N,N-Di-(n-Butyl)aminomethyl, N-Ethyl-N-methyl-aminomethyl, N-Methyl-N-propyl-aminomethyl;
C₆-C₁₈-Aryl wie Phenyl, Naphthyl, Anthracenyl, Phenantrenyl, Azulenyl, Biphenylenyl, Triphenylenyl, bevorzugt Phenyl, wobei die Arylreste bis zu drei der unter R⁵ genannten Gruppen tragen können;
C₆-C₁₈-Aryl-C₁-C₄-alkyl, bevorzugt Phenyl-C₁-C₄-alkyl wie Benzyl, 2-Phenylethyl, 3-Phenylpropyl, 4-Phenylbutyl, besonders bevorzugt Benzyl, 2-Phenylethyl, 3-Phenylpropyl, wobei die Arylgruppen bis zu drei der unter R⁵ genannten Gruppen tragen können;
- R, R³: C₁-C₁₈-Alkyl wie bei R¹ genannt, darunter besonders bevorzugt C₁-C₄-Alkyl wie Methyl, Ethyl, n-Propyl, i-Propyl, n-Butyl, sek.-Butyl, i-Butyl, tert.-Butyl;
C₃-C₈-Cycloalkyl wie Cyclopropyl, Cyclopentyl, Cyclohexyl, Cycloheptyl, Cyclooctyl, 4-Methylcyclohexyl, 2,4,6-Trimethylcyclohexyl;
C₆-C₁₈-Aryl wie bei R¹ genannt, vorzugsweise Phenyl, welches bis zu drei der unter R⁵ genannten Gruppen tragen kann;
C₆-C₁₈-Aryl-C₁-C₄-alkyl wie bei R¹ genannt, vorzugsweise Phenyl-C₁-C₄-alkyl, besonders bevorzugt Benzyl, 2-Phenylethyl, 3-Phenylpropyl, wobei die Phenylgruppe bis zu drei der unter R⁵ genannten Gruppen tragen kann;
- R⁵: Halogen wie Fluor, Chlor, Brom und Iod, C₁-C₂₂-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Heneicosyl und n-Docosyl, vorzugsweise C₁-C₁₂-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl und Stearyl, besonders bevorzugt C₁-C₄-Alkyl wie Methyl, Ethyl, n-Propyl, i-Propyl, n-Butyl, i-Butyl, sek.-Butyl, tert.-Butyl; C₁-C₄-Alkoxy wie Methoxy, Ethoxy, n-Propoxy und n-Butoxy, Carboxy, C₁-C₄-Alkoxy-carbonyl wie Methoxycarbonyl, Ethoxycarbonyl, n-Propoxycarbonyl und n-Butoxycarbonyl, Aminocarbonyl, C₁-C₄-Alkylaminocarbonyl wie Methylaminocarbonyl, Ethylaminocarbonyl, n-Propylaminocarbonyl und n-Butylaminocarbonyl, Di-(C₁-C₄-Alkyl)aminocarbonyl wie Dimethylaminocarbonyl, Diethylaminocarbonyl, Di-(n-Propyln-Propylaminocarbonyl und Di-(n-Butyl)aminocarbonyl, Nitrilo, Nitro, Amino, C₁-C₄-Alkylamino wie Methylamino, Ethylamino, n-Propylamino und n-Butylamino, Di-(C₁-C₄-alkyl)amino wie Dimethylamino, Diethylamino, Di-(n-Propyl)amino und Di-(n-Butyl)amino.

Besonders bevorzugte Oxadimethacrylverbindungen I sind solche mit E und/oder F = -COOR¹ mit R¹ = C₁-C₄-Alkyl, C₅-C₈-Cycloalkyl und C₆-Aryl wie 2,2'-[Oxybis(methylen)]bis-2-propensäure-dimethylester, 2,2'-[Oxybis(methylen)]bis-2-propensäure-dicyclohexylester und 2,2'-[Oxybis(methylen)]bis-2-propensäure-cyclohexylester-2'-propensäure-methylester und 2,2'-[Oxybis(methylen)]bis-2-propensäure-diphenylester.

Oxadimethacrylverbindungen I sind für den Fall, daß E und F 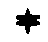 COOH, sowohl aus Acrylverbindungen der allgemeinen Formel III

H₂C=C(E)H III

als auch aus Alkoholen der allgemeinen Formel IV

H₂C=C(E)CH₂OH IV

durch Umsetzung mit Formaldehyd zugänglich. Ihre Herstellung ist beispielsweise in der US-A 4,889,948 beschrieben. Vorteilhafter ist es jedoch, speziell um besonders reine Verbindungen zu erhalten, wenn man nach einem der folgenden Verfahren arbeitet:
A) Umsetzung einer Acrylverbindung der allgemeinen Formel III

   H₂C=C(E)H III

   in Gegenwart von Sauerstoff, mindestens einem tertiären Amin und vorzugsweise mindestens einem Polymerisationsinhibitor mit Formaldehyd oder einer Formaldehydliefernden Verbindung zum Alkohol der allgemeinen Formel IV

   H₂C=C(E)CH₂OH IV

   und anschließende weitere Umsetzung des Alkohols IV,
   b₁) unter Isolierung desselben oder
   b₂) ohne Isolierung desselben
   unter Erhitzen in Gegenwart von Sauerstoff, mindestens einem tertiären Amin und vorzugsweise mindestens einem Polymerisationsinhibitor zur Oxadimethacrylverbindung I,

   CH₂=C(E)CH₂-O-CH₂C(E)=CH₂,

   oder
B) Umsetzung des Alkohols IV in Gegenwart von Sauerstoff, mindestens einem tertiären Amin und vorzugsweise mindestens einem Polymerisationsinhibitor unter Erhitzen zur Oxadimethacrylverbindung I,

   CH₂=C(E)CH₂-O-CH₂C(E)=CH₂,

   oder
C) Umsetzung einer Mischung aus zwei verschiedenen Acrylverbindungen der allgemeinen Formeln III und IIIa

   H₂C=C(E)H III

   H₂C=C(F)H IIIa

   in Gegenwart von Sauerstoff, mindestens einem tertiären Amin und vorzugsweise mindestens einem Polymerisationsinhibitor mit Formaldehyd oder einer Formaldehydliefernden Verbindung zu den Alkoholen der allgemeinen Formeln IV und IVa

   H₂C=C(E)CH₂OH IV

   H₂C=C(F)CH₂OH IVa

   und anschließende weitere Umsetzung mit oder ohne weitere Isolierung der Alkohole IV und IVa mit entweder
   a) dem diese Alkohole enthaltenden Reaktionsgemisch, oder
   b) den isolierten Alkoholen
   unter Erhitzen in Gegenwart von Sauerstoff, mindestens einem tertiären Amin und vorzugsweise mindestens einem Polymerisationsinhibitor zur Oxadimethacrylverbindung I,

   CH₂=C(E)CH₂-O-CH₂C(F)=CH₂,

   oder
D) Umsetzung einer Acrylverbindung III in Gegenwart von Sauerstoff, mindestens einem tertiären Amin und mindestens einem Polymerisationsinhibitor mit Formaldehyd oder einer Formaldehyd-liefernden Verbindung zum Alkohol IV, und anschließende weitere Umsetzung des isolierten Alkohols IV, oder des den nicht isolierten Alkohol IV enthaltenden Reaktionsgemisches, mit einem weiteren, davon verschiedenen Alkohol IVa unter Erhitzen in Gegenwart von Sauerstoff, mindestens einem tertiären Amin und vorzugsweise mindestens einem Polymerisationsinhibitor zur Oxadimethacrylverbindung I,

   CH₂=C(E)CH₂-O-CH₂C(F)=CH₂,

   oder
E) Umsetzung einer Mischung aus zwei verschiedenen Alkoholen IV und IVa in Gegenwart von Sauerstoff, mindestens einem tertiären Amin und mindestens einem Polymerisationsinhibitor unter Erhitzen zur Oxadimethacrylverbindung

   I CH₂=C(E)CH₂-O-CH₂C(F)=CH₂.

Die für diese Verfahren benötigten Acrylverbindungen III sind entweder käuflich oder man erhält sie beispielsweise durch Veresterung, Umesterung, Amidierung oder Aminolyse nach an sich bekannten Verfahren (s. H.Rauch-Puntigam et al., Chemie, Physik und Technologie der Kunststoffe, Bd.9, Springer Verlag, Berlin, 1967) aus den entsprechenden leicht zugänglichen Acrylvorstufen wie Acrylsäure und deren bekannten Derivaten.

Die entsprechenden Alkohole IV sind entweder bekannt (s. EP-B 184 731) oder nach einem der oben angegebenen Verfahren aus den Acrylverbindungen III zugänglich.

Den Formaldehyd kann man gasförmig, flüssig, beispielsweise als wäßrige Lösung wie Formalin oder in Form einer alkoholischen Lösung, oder in fester Form, zum Beispiel als para-Formaldehyd, Trioxan, Tetroxocan oder als Halbacetal einsetzen.

Als tertiäre Amine kommen offenkettige aliphatische oder cyclische tertiäre Amine in Betracht wie Trimethylamin, Triethylamin, Tri-n-propylamin, Triisopropylamin, Tri-n-butylamin, Triisobutylamin, Tri-n-pentylamin, Methyldiisopropylamin, N,N-Diethylisopropylamin, N,N-Dimethylethylamin, N,N-Dimethylisopropylamin, Tri-2-ethylhexylamin, N-Methyldiethylamin, N,N-Dimethyl-n-propylamin, N,N-Dimethyl-n-butylamin, N,N-Dimethyl-isobutylamin, N,N-Dimethyl-(2-ethylhexyl)amin, N,N-Diisopropyl-(2-ethylhexyl)amin, N,N-Di-n-butyl-(2-ethylhexyl)amin, N-Methyl-di-(2-ethylhexyl)amin, N-n-butyl-(2-ethylhexyl)amin, N-Isobutyl- di-(2-ethylhexyl)amin, Chinuclidin und 1,4-Diazabicyclo[2.2.2]octan (DABCO®), bevorzugt Chinuclidin und DABCO®, besonders bevorzugt DABCO®.

Als Polymerisationsinhibitoren verwendet man in der Regel die üblichen wie Hydrochinon, Hydrochinonmonomethylether, p-Benzochinon, Phenol, 2,6-Dimethylphenol, 2,6-Di-tert.-Butylphenol, Methylenblau, Diphenylamin, Cu-(II)-oleat, Fe-(III)-acetylacetonat, Brenzcatechin, bevorzugt Hydrochinonmonomethylether und Hydrochinonmonoethylether.

Den Sauerstoff kann man in reiner Form oder in Form eines Gemisches mit nicht reaktiven Gasen, bevorzugt Luft, über oder durch das Reaktionsgemisch leiten.

Bei der Umsetzung der Acrylverbindung III, bzw. der Mischung III und IIIa, zur Oxadimethacrylverbindung I über die Alkoholverbindung IV, setzt man in der ersten Stufe die Acrylverbindung III bzw. die Mischung III und IIIa und den Formaldehyd im allgemeinen im Molverhältnis Acrylverbindung III bzw. Mischung III und IIIa zu Formaldehyd von 1:1 bis 8:1, vorzugsweise von 1,0:1 bis 2,5:1, ein.

Das tertiäre Amin verwendet man hierbei vorzugsweise im Molverhältnis Formaldehyd zu Amin von 1:1 bis 200:1, bevorzugt 2:1 bis 100:1, besonders bevorzugt 4:1 bis 50:1.

Den Polymerisationsinhibitor setzt man in der Regel in Mengen von 10 bis 1000 mg pro kg Acrylverbindung III bzw. Mischung III und IIIa ein.

Die Menge des Sauerstoffs liegt in der Regel im Bereich von 0,01 bis 100, bevorzugt von 0,1 bis 20 l/h pro kg Acrylverbindung III bzw. Mischung III und IIIa. Verwendet man Luft als Sauerstofflieferanten, so wählt man die Gasmenge im allgemeinen im Bereich von 0,01 bis 1000, bevorzugt von 1 bis 250 l/h pro kg Acrylverbindung III bzw. Mischung III und IIIa.

Im allgemeinen arbeitet man bei Temperaturen von 10 bis 100°C, bevorzugt von 40 bis 80°C, besonders bevorzugt von 60 bis 75°C. Des weiteren führt man die Reaktion in der Regel unter Atmosphärendruck durch. Sie kann jedoch auch bei vermindertem oder erhöhtem Druck vorgenommen werden. Ein Arbeiten unter Druck ist vor allem dann vorteilhaft, wenn man die Umsetzung bei Temperaturen oberhalb von 80°C vornimmt.

Des weiteren führt man die Reaktion in der Regel ohne Lösungsmittel durch. Jedoch kann man die Umsetzung auch in Gegenwart eines geeigneten Lösungsmittels wie eines C₅-C₈-Alkans, bevorzugt n-Pentan, n-Hexan, n-Heptan, n-Octan, i-Octan, ein Carbonsäureester wie Acetylacetat, sowie ein aromatisches Lösungsmittel wie Benzol, Toluol und Xylole, besonders bevorzugt n-Hexan, i-Octan und Toluol, oder deren Mischungen, durchführen.

Die Reaktionszeit hängt hauptsächlich von der Reaktionstemperatur ab. Sie liegt im allgemeinen im Bereich von 1 bis 6 h.

Den bei dieser Reaktion gebildeten Alkohol IV, bzw. die Mischung IV und IVa kann man nach den üblichen Aufarbeitungsmethoden wie Destillation oder Chromatographie isolieren.

In der zweiten Stufe, ausgehend vom Alkohol IV, bzw. von der Mischung IV und IVa, wählt man in der Regel Art und Menge des Amins, des Polymerisationsinhibitors sowie des Lösungsmittels wie in der ersten Stufe. Die Menge des Sauerstoffs liegt in der Regel im Bereich von 0,01 bis 1000, bevorzugt von 0,1 bis 50 l/h pro kg Alkoholverbindung IV bzw. Mischung IV und IVa. Verwendet man Luft als Sauerstofflieferanten, so wählt man die Gasmenge im allgemeinen im Bereich von 0,1 bis 1000, bevorzugt von 1 bis 500 l/h pro kg Alkoholverbindung IV bzw. Mischung IV und IVa.

Die Umsetzung der zweiten Stufe (Alkohol IV zu Oxadimethacrylverbindung I) nimmt man im allgemeinen bei einer Temperatur im Bereich von 100 bis 200°C, bevorzugt von 100 bis 150°C, und bei einem Druck, der in der Regel im Bereich von 70 bis 300 kPa liegt, vor, bevorzugt arbeitet man jedoch unter Atmosphärendruck.

Das während der Reaktion anfallende Reaktionswasser kann man in der Regel durch Destillation, bevorzugt durch Rektifikation, aus dem Reaktionsgemisch entfernen.

Zweckmäßig kann man dabei dem Reaktionsgemisch ein Schleppmittel zusetzen. Hierfür eignen sich beispielsweise aliphatische, cycloaliphatische und aromatische Kohlenwasserstoffe wie n-Hexan, n-Heptan, i-Octan, Benzol, Toluol, Xylol, Cyclohexan, sowie Carbonsäureester wie Essigsäureethylester, oder die vor der Reaktion nicht abgetrennte Acrylverbindung III. Den Siedepunkt der Schleppmittel wählt man im allgemeinen im Bereich zwischen 80 und 200°C.

Die Reaktionszeit ist von den üblichen Parametern wie Temperatur, Druck und den Mengen der Ausgangsstoffe abhängig und liegt in der Regel im Bereich von 4 bis 12 h.

Führt man die Reaktionen ausgehend von der Acrylverbindung III, bzw. der Mischung III und IIIa, einstufig aus, d.h. ohne Isolierung des Alkohols IV bzw. der Mischung IV und IVa, so trennt man zweckmäßigerweise die im überschuß noch vorhandene Acrylverbindung III, bzw. die Mischung III und IIIa, vor der Weiterreaktion zur Oxadimethacrylverbindung I ab, beispielsweise durch Destillation. Dies kann jedoch auch nach der Reaktion zur Oxadimethacrylverbindung I erfolgen.

Besonders bevorzugt wird bei Verwendung eines der Verfahren A), C) und D) die in der Regel im Überschuß vorliegende Acrylverbindung III bzw. IIIa abdestilliert, bevor mit der Isolierung und Reinigung durch Kristallisation begonnen wird. Ebenso ist es zweckmäßig, das sich bei den Verfahren A) bis E) bildende Reaktionswasser vor der Kristallisation beispielsweise durch Destillation abzutrennen.

Zur Reinigung kann man die Oxadimethacrylverbindungen I aus Lösungen fällen, die mindestens eine (bei Raumtemperatur) flüssige Kohlenwasserstoffverbindung enthalten. Dabei kann diese Kohlenwasserstoffverbindung bereits von Anfang an in diesen Lösungen vorhanden sein oder erst später hinzugefügt werden.

In der Regel fällt man direkt aus den Reaktionsgemischen, die im allgemeinen neben der Oxadimethacrylverbindung weitere Stoffe wie Ausgangsstoffe, Katalysatoren, Stabilisatoren usw. enthalten können, aus.

Die die Löslichkeit herabsetzende Kohlenwasserstoffverbindung kann man schon zu Beginn der Herstellung der Lösung einsetzen. Zweckmäßig verfährt man in der Regel so, daß man sie erst dann der Lösung mit der Oxadimethacrylverbindung hinzufügt, wenn man den Fällungs- oder Kristallisationsvorgang einleiten möchte.

Als Kohlenwasserstoffverbindungen verwendet man in der Regel solche, deren Siedepunkte im Bereich von 20 bis 200°C, bevorzugt von 35 bis 130°C, liegen, wie aliphatische, cycloaliphatische oder aromatische Kohlenwasserstoffe oder deren Mischungen. Beispielhaft seien genannt n-Pentan, n-Hexan, n-Heptan, n-Octan, n-Nonan, n-Decan sowie deren verzweigte Isomere, Cyclopentan, Cyclohexan, Cycloheptan, Cyclooctan sowie mit C₁-C₄-Alkyl-Gruppen substituierte Cycloaliphaten wie Methylcyclopentan und Methylcyclohexan, oder aromatische Kohlenwasserstoffe wie Benzol, Toluol, o-, m- und p-Xylol.

Die Kohlenwasserstoffverbindung setzt man in der Regel im Gewichtsverhältnis Kohlenwasserstoffverbindung zu Oxadimethacrylverbindung I von 1:1 bis 100:1, bevorzugt von 1:1 bis 10:1, besonders bevorzugt von 2:1 bis 4:1 ein.

Vorzugsweise wählt man die Temperatur zu Beginn der Kristallisation so, daß sie zweckmäßig 5 bis 15°C unterhalb des Siedepunkts der Kohlenwasserstoffverbindung liegt, um eine möglichst hohe Konzentration an Oxadimethacrylverbindung I in der Kohlenwasserstoffverbindung zu erhalten. Man kann selbstverständlich auch bei anderen Temperaturen arbeiten, beispielsweise bei Raumtemperatur. Jedoch arbeitet man im allgemeinen innerhalb des Bereiches von 20 bis 200°C, bevorzugt von 40 bis 130°C, wobei es gegebenenfalls erforderlich sein kann, daß Drücke größer als Atmosphärendruck zur Anwendung gelangen. In der Regel wählt man einen Druckbereich von 70 bis 250 kPa, bevorzugt Atmosphärendruck.

Fügt man die Kohlenwasserstoffverbindung erst zur Einleitung der Kristallisation hinzu, oder ist die Kohlenwasserstoffverbindung nicht oder nur teilweise mit dem entsprechenden Lösungsmittel mischbar, so kann es vorteilhaft sein, das Gemisch vor der Kristallisation nach üblichen Methoden wie Schütteln, Rühren oder mittels Flüssig-Flüssig-Extraktion, intensiv zu durchmischen. Diesen Schritt kann man ein- oder mehrstufig, kontinuierlich oder diskontinuierlich durchführen. Die Temperatur bei diesem Schritt wählt man zweckmäßig in dem oben genannten Bereich von 20 bis 200, bevorzugt von 40 bis 130°C.

Zur Umkristallisation verwendet man im allgemeinen Lösungen, die die Oxadimethacrylverbindungen in Mengen im Bereich von 5 bis 50, bevorzugt von 10 bis 30 Gew.-% enthalten. Als Lösungsmittel verwendet man dabei in der Regel die weiter oben genannten Kohlenwasserstoffverbindungen.

Das anschließende Auskristallisieren der Oxadimethacrylverbindung I nimmt man in der Regel bei Temperaturen von (-80) bis 30°C, bevorzugt von (-30) bis 20°C vor. Das auskristallisierte Produkt trennt man dann wie üblich, beispielsweise durch Filtrieren oder Zentrifugieren, ab und trocknet es in an sich bekannter Weise.

Nach dem Kristallisationsvorgang kann man, bei Vorliegen von zwei oder mehreren flüssigen Phasen, die nicht mit der Kohlenwasserstoffverbindung angereicherte Phase abtrennen und sie einem erneuten Aufarbeitungszyklus zuführen, um auch die restlichen Mengen der Oxadimethacrylverbindung I zu erfassen. Diesen Vorgang kann man beliebig oft wiederholen und kontinuierlich oder diskontinuierlich durchführen.

Den Kristallisationsvorgang wiederholt man im allgemeinen so oft, bis die gewünschte Reinheit erreicht ist.

Oxadimethacrylverbindungen I mit E und/oder F = COOH stellt man vorzugsweise dadurch her, daß man den Oxadimethacrylsäureester I mit E und F = -COOR¹, oder eine Mischung verschiedener dieser Ester, in basischer Lösung hydrolysiert und dann das entstandene Salz ansäuert. Danach kann man die ausgefallene Säure abtrennen und gegebenenfalls im sauren, wäßrigen Milieu umkristallisieren.

Als basische Lösung wählt man im allgemeinen wäßrige Lösungen von Alkalimetallalkoholaten wie Natriummethanolat, Kaliummethanolat, Natriumethanolat, Kaliumethanolat, bevorzugt Natriummethanolat, Alkalimetall- und Erdalkalimetallhydroxide wie Lithiumhydroxid, Natriumhydroxid, Kaliumhydroxid, Magnesiumhydroxid, Calciumhydroxid und Bariumhydroxid, bevorzugt Natrium- und Kaliumhydroxid, oder Ammoniak.

Dem Reaktionsmedium können Zusatzstoffe wie Lösevermittler und Polymerisationsinhibitoren zugesetzt werden. Als Lösevermittler kann man beispielsweise Alkohole, bevorzugt C₁-C₄-Alkohole wie Methanol, Ethanol, n-Propanol, i-Propanol, n-Butanol, tert.-Butanol, besonders bevorzugt Methanol und Ethanol, verwenden. Als Polymerisationsinhibitoren verwendet man bevorzugt die üblichen wasserlösliche Verbindungen wie Hydrochinon, Hydrochinonmonoethylether und Cu(II)-Salze.

Zur Freisetzung der freien Säure setzt man dem Reaktionsmedium eine Säure, bevorzugt eine Mineralsäure wie Schwefelsäure, Salzsäure, Phosphorsäure und Salpetersäure, besonders bevorzugt Salzsäure, zu.

Das Molverhältnis von Base zu Ester wählt man im allgemeinen im Bereich von 1 bis 5, bevorzugt von 2 bis 4. Die Base setzt man in der Regel als wäßrige Lösung in Konzentrationen von 0,1 bis 40, vorzugsweise von 1 bis 20 Gew.-%, bezogen auf Wasser, ein.

Die Menge an Lösevermittler wählt man im allgemeinen im Bereich von 0 bis 30, vorzugsweise von 0 bis 10 Gew.-%, die Menge der Polymerisationsinhibitoren wählt man in der Regel im Bereich von 0 bis 0,1, vorzugsweise von 0 bis 0,05 Gew.-%, jeweils bezogen auf die Gesamtmenge der Reaktionsmischung.

Die Menge der zur Fällung eingesetzten Säure hängt von deren Stärke und Konzentration ab. In der Regel wählt man sie so, daß man das Salz enthaltende Medium, in der Regel das Reaktionsgemisch, auf einen pH-Wert im Bereich von 0,5 bis 2,0, bevorzugt von 0,5 bis 1,5, einstellt.

Die Wahl der Temperatur ist nach den bisherigen Beobachtungen nicht kritisch. In der Regel arbeitet man in einem Temperaturbereich von 10 bis 100°C unter einem Druck im Bereich von 70 bis 300 kPa. Man kann auch bei Temperaturen oberhalb von 100°C, in der Regel aber nicht höher als 200°C, in einem Druckreaktor hydrolysieren. Bevorzugt arbeitet man jedoch unter Atmosphärendruck in einem Bereich von 15 bis 50°C.

Die ausgefällte Oxadimethacrylsäure kann mit den üblichen Methoden wie Filtration, Dekantieren oder Zentrifugation abgetrennt und, falls erwünscht, gereinigt werden, beispielsweise indem man sie mit kaltem Wasser wäscht und anschließend trocknet. Nach den bisherigen Beobachtungen weist die so erhaltene Oxadimethacrylsäure eine Reinheit von mindestens 99 % auf.

Besonders reine Oxadimethacrylsäure, beispielsweise mit einem Gehalt an Nebenprodukten kleiner als 100 ppm, kann man vorzugsweise durch Umkristallisation erhalten. Hierzu löst man in der Regel die Oxadimethacrylsäure in 50 bis 100, bevorzugt 60 bis 100, besonders bevorzugt in 80 bis 100°C heißem Wasser und läßt sie anschließend bei Temperaturen im Bereich von 5 bis 30, vorzugsweise 10 bis 25°C, auskristallisieren. Man kann der Lösung Polymerisationsinhibitoren wie Hydrochinonmonomethylether in Mengen von 10 bis 20 ppm zusetzen. Des weiteren kann man die Lösung mit adsorbierenden Stoffen wie Aktivkohle, Kieselgur und Zeolithe versetzen, anschließend heiß filtrieren und dann zur Kristallisation abkühlen lassen.

Die Carbonsäuregruppen der Oxadimethacrylsäure kann man nach an sich bekannten Verfahren zu Ester-, Amid- und Keton-Gruppen weiterfunktionalisieren (s. Houben-Weyl, Methoden der organischen Chemie, Bd. VIII/III, Thieme, Berlin, 1952, S. 503 ff und S. 647 ff).

Als Komponente B) verwendet man erfindungsgemäß 1 bis 99 Gew.-%, bevorzugt 50 bis 95 Gew.-%, mindestens einer Verbindung ausgewählt aus der Gruppe bestehend aus Acryl- und Methacrylsäure ("(Meth)Acrylsäure"), und den C₁-C₂₀-Alkyl- und C₅-C₁₂-Cycloalkylestern der (Meth)Acrylsäure, bevorzugt die C₁-C₁₂-Alkylester, insbesondere die C₁-C₄-Alkylester wie Methylacrylat, Ethylacrylat, Propylacrylat, n-Butylacrylat, tert.Butylacrylat sowie 2-Ethylhexylacrylat und Laurylacrylat, Methylmethacrylat, Ethylmethacrylat, Propylmethacrylat, n-Butylmethacrylat, tert.-Butylmethacrylat, insbesondere Methylmethacrylat.

Des weiteren kann man dem Monomerengemisch als Komponente (C) 0 bis 98 Gew.-%, bevorzugt 1 bis 50 Gew.-%, weitere von A) und B) verschiedene radikalisch copolymerisierbare Monomere hinzufügen.

Beispielhaft seien genannt:
Acryl- und Methacrylnitril,
Acryl- und Methacrylamid sowie deren N-Alkyl- und N,N-Dialkylderivate mit C₁-C₂₀-Alkylgruppen,
Vinyl- und Vinylidenester von aliphatischen C₂-C₈-Carbonsäuren wie Vinylacetat,
Vinyl- und Vinylidenhalogenide wie Vinylchlorid und Vinylidenchlorid,
vinylaromatische Monomere wie Styrol und alpha-Methylstyrol sowie dessen ein- oder mehrfach kernsubstituierte Derivate, beispielsweise 2-, 3-, 4-Methylstyrol, 2-, 3-, 4-Ethylstyrol, 2-, 3-, 4-Isopropylstyrol, 4- tert.-Butylstyrol, 3,4-Dimethylstyrol, 2-, 4-Chlorstyrol, 2-, 4-Bromstyrol, 3,4-Dichlorstyrol, Vinyltoluol, alpha-Chlorstyrol, besonders bevorzugt Styrol,
Malein-, Fumar- und Itaconsäure-C₁-C₁₀-alkylester,
Malein-, Fumar- und Itaconsäureamid sowie deren N-Alkyl- und N,N-Dialkylderivate mit C₁- bis C₁₀-Alkylgruppen sowie Mischungen derselben.

Als Übertragungsregler kann man einwertige C₁-C₁₂-Alkylmercaptane wie Methylmercaptan, sek.-Butylmercaptan, n-, i- und tert.-Dodecylmercaptan sowie Thioessigsäure und deren C₁-C₄-Alkylester verwenden. Man setzt sie in der Regel in Mengen von 0 bis 5 Gew.-%, bevorzugt von 0,05 bis 2 Gew.-% ein.

Die Übertragungsregler können zur Begrenzung der Kettenlänge dienen und tragen nach den bisherigen Beobachtungen zur Verbesserung der thermischen Stabilität bei.

Die Herstellung der erfindungsgemäßen Copolymerisate führt man im allgemeinen in an sich bekannter Weise beispielsweise in Substanz oder in Lösung durch.

Bei der Herstellung durch Substanzpolymerisation kann man öllösliche Initiatoren (Radikalstarter wie Diacylperoxide, Perester wie Pivalinpersäure- tert.-butylester, Peroxidicarbonate, Hydroperoxide, Dialkylperoxide wie Dilaurylperoxid oder Azoverbindungen wie Azo-bis-isobutyronitril) verwenden. Die Polymerisationstemperatur liegt in der Regel im Bereich von 20 bis 200°C, bevorzugt von 50 bis 160°C.

Das Molekulargewicht kann man durch geeignete Kettenüberträger, wie die oben genannten Mercaptane, oder durch eine geeignete Temperaturführung regulieren. Im allgemeinen wählt man Molekulargewichte im Bereich von 50.000 bis 180.000, bevorzugt von 80.000 bis 130.000 g/mol (Gewichtsmittelwert des Molekulargewichts).

Die Herstellung der Copolymerisate kann auch durch Lösungspolymerisation erfolgen. Geeignete Lösungsmittel sind beispielsweise Toluol, Xylol, Aceton oder Tetrahydrofuran. Im übrigen kann man die Polymerisation unter den für die Substanzpolymerisation geschilderten Bedingungen durchführen.

Nähere Ausführungen hierzu finden sich beispielsweise in Houben-Weyl, Methoden der organischen Chemie, Bd. 14/1.

Als Imidierungsreagenzien II, R⁴NH₂, kommen neben Ammoniak primäre Amine zur Anwendung, die ausgewählt sind aus der Gruppe bestehend aus C₁-C₂₂-Alkylaminen, C₅-C₈-Cycloalkylaminen, C₆-C₁₀-Arylaminen, C₆-C₁₀-Aryl-C₁-C₄-alkylaminen, wobei die Cycloalkyl-, Aryl- und Aralkyl-Reste der Amine bis zu dreifach mit Resten, ausgewählt aus der Gruppe bestehend aus C₁-C₄-Alkyl, C₁-C₄-Alkoxy und Halogen wie Fluor, Chlor und Brom, substituiert sein können.

Beispielhaft seien genannt Methylamin, Ethylamin, n-Propylamin, i-Propylamin, n-Butylamin, 1-Methylpropylamin, 2-Methylpropylamin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n- Octylamin, n-Nonylamin, n-Decylamin, n-Undecylamin, n-Dodecylamin, Stearylamin, Cyclopentylamin, Cyclohexylamin, Cycloheptylamin, Cyclooctylamin, Anilin, 2-, 4-Methylanilin, 2-, 4-Methoxyanilin, 2-, 4-Chloranilin, 2-, 4-Bromanilin, Benzylamin, Phenethylamin und Phenylpropylamin, besonders bevorzugt Cyclohexylamin.

Eine bevorzugte Ausführungsform besteht darin, daß man den durch die Aminolyse der Estergruppen entstandenen Alkohol aus dem Reaktionsgemisch entfernt. Besonders vorteilhaft kann man dies durch kontinuierliches Abdestillieren des Alkohols erreichen. Hierzu ist es zweckmäßig, daß man für die Imidierung ein Amin verwendet, das einen höheren Siedepunkt aufweist als der aus dem Reaktionsgemisch zu entfernende Alkohol, so daß keine oder nur unwesentliche Mengen Amin mitentfernt werden.

Prinzipiell kann man auch Amine mit gleichem oder niedrigerem Siedepunkt als der abzudestillierende Alkohol einsetzen, indem man das mitentfernte Amin beispielsweise durch weitere Destillation vom Alkohol abtrennt und wieder in das Reaktionsgemisch einbringt. Jedoch wird die hier vorgeschlagene Variante (Siedepunkt Amin > Siedepunkt Alkohol) aufgrund der einfacheren Reaktionsführung bevorzugt.

Die Reaktion führt man in der Regel so durch, daß man eine Mischung bestehend aus Copolymerisat (1) und Amin bevorzugt in einem Lösungsmittel unter Sauerstoffausschluß zum Sieden erhitzt und den während der Reaktion entstehenden Alkohol durch Destillation kontinuierlich aus dem Reaktionsgemisch entfernt.

Das Amin kann man dabei gleich zu Beginn der Reaktion vorlegen oder beispielsweise kontinuierlich in dem Maße wie es verbraucht wird zugeben.

Das Gewichtsverhältnis von eingesetztem Amin zu Acrylat-Polymer wählt man im Bereich von 1:1 bis 400:1, bevorzugt von 1:1 bis 200:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid,
N-Methyl-2-pyrrolidon, N-Ethyl-2-pyrrolidon,
N,N,N',N'-tetrasubstituierte, cyclische oder acyclische Harnstoffe wie Tetramethylharnstoff,
N-substituierte, cyclische oder acyclische (Poly)Amine wie Dicyclohexylmethylamin, Dimethylcyclohexylamin, N,N,N',N'-Tetramethylethylendiamin, N,N,N',N'-Tetramethylhexamethylendiamin,
hochsiedende Ether wie Ethylenglykoldimethylether, Diethylenglykoldimethylether,
Alkylencarbonate wie Ethylencarbonat, Propylencarbonat,
sowie andere übliche aprotische und polare Lösungsmittel wie Hexamethylphosphorsäuretriamid, Nitroalkane wie Nitromethan, Dimethylsulfoxid, Diphenylsulfoxid und Sulfolan verwenden, wobei N- Methylpyrrolidon bevorzugt ist.

Das Gewichtsverhältnis von verwendetem Lösungsmittel zu Polymer liegt in der Regel im Bereich von 1:1 bis 100:1, bevorzugt von 1:1 bis 10:1.

Die Reaktionstemperatur wählt man im allgemeinen im Bereich von 100 bis 280°C, bevorzugt im Bereich von 120 bis 220°C.

Der Reaktionsdruck ist in der Regel unkritisch. Man arbeitet im allgemeinen im Bereich von 80 bis 250 kPa, bevorzugt unter Atmosphärendruck.

Die Wahl des pH-Bereiches ist ebenfalls unkritisch und liegt wegen des eingesetzten Amins in der Regel oberhalb von 7.

Die Reaktionszeit liegt in der Regel im Bereich von 1 bis 20 h, bevorzugt 1 bis 10 h.

Des weiteren kann man dem Reaktionsgemisch Katalysatoren in Mengen im Bereich von 0,01 bis 10 Gew.-%, bezogen auf das eingesetzte Polymer, zur Beschleunigung der Reaktion zusetzen. Beispielhaft seien genannt
tertiäre Amine wie Tricyclohexylamin,
substituierte Guanidine wie 1,1,3,3-Tetramethylguanidin, 1,3- Diphenylguanidin,
tetrasubstituierte Alkylammoniumverbindungen wie Trimethylstearylanmoniumchlorid,
organische Titanverbindungen wie Tetrapropoxytitan, Tetrabutoxytitan,
organische Zinnverbindungen wie Dibutylzinnoxid, Dibutylzinndidodecanat,
aromatische Amine und Imide wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl,
Imide wie N,N'-Dicyclohexylcarbodiimid,
sowie Antimontrioxid, Zinndioxid, Natriumamid, Natrium- und Kaliumalkoholate wie Natrium- und Kaliummethanolat, Ammoniumchlorid und Ammoniumiodid.

Die erfindungsgemäßen Copolymerisate und die daraus hergestellten Formkörper, Folien oder Fasern können übliche Zusatzstoffe und Verarbeitungshilfsmittel enthalten. Deren Anteil beträgt in der Regel bis zu 5, vorzugsweise bis zu 2 Gew.-%, bezogen auf das Gesamtgewicht der Copolymerisate.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher und Antistatika.

Oxidationsverzögerer und Wärmestabilisatoren, die den thermoplastischen Massen gemäß der Erfindung zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Konzentrationen bis zu 1 Gew.-%, bezogen auf das Gewicht der Mischung.

Beispiele für UV-Stabilisatoren sind substituierte Resorcine, Salicylate, Benzotriazole und Benzophenone, die man im allgemeinen in Mengen bis zu 1 Gew.-% einsetzen kann.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe sind organische Farbstoffe, beispielsweise Anthrachinonrot, organische Pigmente und Lacke wie Phtalocyaninblau, anorganische Pigmente wie Titandioxid und Cadmiumsulfid. Als Weichmacher seien beispielhaft Dioctylphtalat, Dibenzylphtalat und Butylbenzylphtalat genannt.

Als weitere Zusatzstoffe kann man Flammschutzmittel in der Regel in Mengen von 1 bis 40 Gew.-% einsetzen.

Solche Flammschutzmittel sind beispielsweise organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Zugabe der Zusatzstoffe kann man in jeder Stufe der Herstellung durchführen, zweckmäßig gibt man die Stabilisatoren frühzeitig zu, um schon zu Beginn einen Schutz zu haben. In Übereinstimmung damit, gibt man im allgemeinen die Stabilisatoren schon während des Polymerisationsverfahrens zu, soweit sie dieses nicht stören.

Die erfindungsgemäßen Copolymerisate kann man nach üblichen Methoden verarbeiten, z.B. durch Spritzguß, Extrusion oder Sintern zur Herstellung von Formkörpern, Folien oder Fasern.

Mit den erfindungsgemäßen Copolymerisaten lassen sich thermoplastisch verarbeitbare Formmassen mit hoher Wärmeformbeständigkeit herstellen.

### Beispiele

### Beispiele 1

### Darstellung von 2,2'[Oxybis(methylen)]bis-2-propensäure-dimethylester (Oxadimethylmethacrylat)

Eine Mischung aus 600 g Methylacrylat, 105 g para-Formaldehyd, 39 g DABCO® (1,4-Diazabicyclo[2.2.2]octan) und 120 mg Hydrochinonmonomethylether wurde während 1,75 h auf 75°C erhitzt, wobei gleichzeitig 10 l/h Luft durch die Mischung geleitet wurden. Dann wurde unter weiterem Erhitzen überschüssiges Methylacrylat soweit abdestilliert, bis die Temperatur des Reaktionsgemisches im Sumpf 135°C betrug. Anschließend wurde das bei der Reaktion entstandene Reaktionswasser während 4h bei 135°C abdestilliert. Dann wurde das Reaktionswasser auf 60°C abgekühlt, mit 975 g n-Hexan versetzt und eine Stunde bei 60°C gerührt. Danach wurde die untere Phase abgetrennt und die obere Phase unter Rühren auf 0°C abgekühlt. Hierbei fiel ein Teil des Dimethylesters in Form von feinen, weißen Kristallen aus. Nach dem Abfiltrieren, Waschen mit 200 ml 0°C kaltem n- Hexan und Trocknen bei 25°C/10 kPa, wurden 244 g des Dimethylesters in einer Reinheit von 95 % erhalten. Erneute Kristallisation führte zu einem Dimethylester mit einer Reinheit von 99,5%.

### Beispiel 2

### Darstellung von 2,2'[Oxybis(methylen)]bis-2-propensäure-dicyclohexylester (Oxadicyclohexylmethacrylat)

Eine Mischung aus 739 g Cyclohexylacrylat, 72 g para-Formaldehyd, 26,9 g DABCO® und 413 mg Hydrochinonmonomethylether wurde während 6 h auf 75°C erhitzt, wobei gleichzeitig 10 l/h Luft durch die Mischung geleitet wurden. Dann wurde unter weiterem Erhitzen überschüssiges Cyclohexylacrylat soweit abdestilliert, bis die Temperatur des Reaktionsgemisches im Sumpf 135°C betrug. Anschließend wurde das bei der Reaktion entstandene Reaktionswasser während 18 h bei 135°C abdestilliert, wobei als azeotropes Schleppmittel Isooctan diente. Danach erhielt man durch präparative Säulenchromatographie des Destillationsrückstandes an Silikagel mit Ethylacetat/Hexan (20/80) als Elutionsmittel 304 g 2,2'[Oxybis(methylen)]bis-2-propensäure-dicyclohexylester (Reinheit: 99,6%).

### Herstellung der Ausgangscopolymere (1)

### Beispiel 3

Eine Mischung aus 60 g Oxadimethylmethacrylat aus Beispiel 1, 140 g Methylmethacrylat, 0,2 g Dilaurylperoxid, 0,4 g Pivalinpersäure- tert.-butylester und 800 g Tetrahydrofuran wurde bei einer Temperatur von 65°C 24h in einer Stickstoffatmosphäre erhitzt. Danach wurde die Reaktionsmischung mit 5 l Methanol versetzt. Das ausgefällte Polymerisat wurde abfiltriert und bei 50°C getrocknet. Hierbei wurden 190 g des Copolymerisats erhalten.

### Beispiele 4 bis 8

Bei den folgenden Beispielen wurde wie im Beispiel 3 verfahren, mit dem Unterschied, daß die Monomerenzusammensetzungen wie in der folgenden Tabelle 1 angegeben variiert wurden.

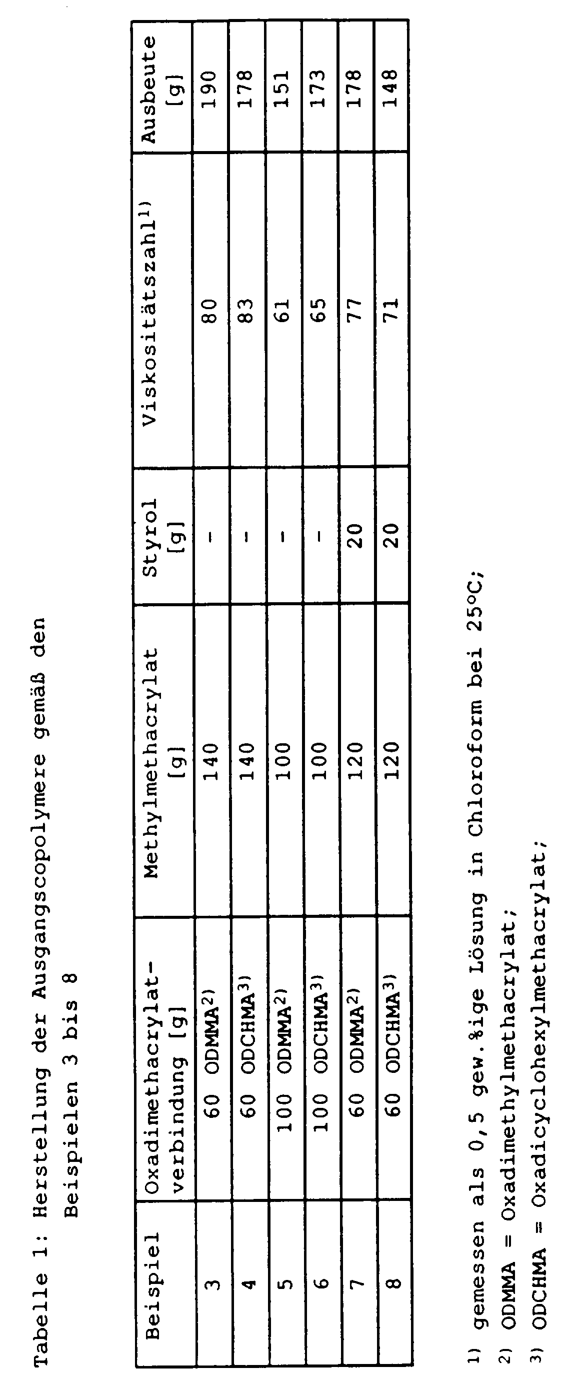

### Imidierung der Copolymerisate

### Beispiel 9

In einem Reaktionsgefäß mit Füllkörperkolonne wurde eine Mischung aus 10 g des Copolymerisats aus Beispiel 3, 10 g Cyclohexylamin und 80 g N- Methylpyrrolidon unter Stickstoff zum Sieden erhitzt. Nach etwa 1 h konnte Methanol am Kopf der Kolonne abgenommen werden, wobei während der nächsten 6 h so verfahren wurde, daß die Temperatur am Kolonnenkopf nicht höher als 70°C betrug. Anschließend wurde das im Überschuß vorhandene Amin abdestilliert und das imidierte Copolymerisat in Methanol ausgefällt und anschließend getrocknet.

Die Charakterisierung des Produkts ist der Tabelle 2 zu entnehmen.

### Beispiele 10 bis 14

Analog zu Beispiel 9 wurden 10 g eines Copolymerisats (aus den Beispielen 4 bis 8) mit jeweils 10 g Cyclohexylamin umgesetzt und wie oben angegeben aufgearbeitet.

### Vergleichsbeispiel (analog zu US-A 4,246,374)

Auf einem Zweischneckenextruder (ZSK-40) mit gleichlaufenden, kämmenden Schnecken wurden 10 kg/h PMMA (aus 99 Gew.-% MMA und 1 Gew.-% MA mit einem mittleren Molekulargewicht (M_{w}) von 115 000 g/mol) kontinuierlich bei einer Temperatur von 270°C mit 5 kg/h Cyclohexylamin umgesetzt. Die Reaktionszeit betrug dabei 0,1 h. Nach der Reaktionszone wurde die Polymerschmelze auf dem gleichen Extruder entgast und granuliert.

Die Charakterisierung der Produkte ist der Tabelle 2 zu entnehmen.

Die Bestimmung der Glasübergangstemperatur T_{g} der Polymere erfolgte nach der DSC-Methode (ASTM D 3418-82) auf einem DSC-30-Gerät der Fa. Mettler.

**Tabelle 2**

| Charakterisierung der Produkte aus den Beispielen 9 bis 14 und dem Vergleichsbeispiel | | | |
|---|---|---|---|
| Beispiel | Polymer (Anteil der Monomere in Gew.-%) | N-Gehalt¹⁾ | T_{g} [°C] |
| 9 | MMA²⁾ (70) / ODMMA³⁾ (30) | 5,1 | 235 |
| 10 | MMA²⁾ (70) / ODCHMA⁴⁾ (30) | 5,0 | 212 |
| 11 | MMA²⁾ (50) / ODMMA³⁾ (50) | 4,3 | 221 |
| 12 | MMA²⁾ (50) / ODCHMA⁴⁾ (50) | 4,5 | 203 |
| 13 | MMA²⁾ (60) / ODMMA³⁾ (30) / Styrol (10) | 4,8 | 231 |
| 14 | MMA²⁾ (60) / ODCHMA⁴⁾ (30) / Styrol (10) | 4,7 | 205 |
| Vergleich | MMA²⁾ (99) / Methylacrylat (1) | 3,0 | 165 |

| | | | |
|---|---|---|---|
| ¹) N-Gehalt aus Elementaranalyse; | | | |
| ²⁾ MMA = Methylmethacrylat; | | | |
| ³⁾ ODMMA = Oxadimethylmethacrylat; | | | |
| ⁴⁾ ODCHMA = Oxadicyclohexylmethacrylat; | | | |

## Patentansprüche

1. Copolymerisate, erhältlich durch
(1) Copolymerisation eines Monomerengemisches aus
(A) 1 bis 99 Gew.-% mindestens eines Monomeren der allgemeinen Formel I
CH₂=C(E)CH₂-O-CH₂C(F)=CH₂ I
in der E und F ausgewählt sind aus der Gruppe aus - COOR¹, -COR¹, -CONRR³ und -CN, und R¹, R und R³ folgende Bedeutung haben:
R¹ = H, C₁-C₁₈-Alkyl, C₃-C₈-cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, Hydroxy-C₁-C₅-alkyl, Amino-C₁-C₅-alkyl, N-C₁-C₄-Alkyl-amino-C₁-C₅-alkyl, N,N-Di-(C₁-C₄-Alkyl)-amino-C₁-C₅-alkyl, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
R,R³ = H, C₁-C₁₈-Alkyl, C₃-C₈-cycloalkyl, C₃-C₈-Cycloalkyl-C₁-C₅-alkyl, wobei die cycloalkyl-Ringe bis zu dreifach mit C₁-C₄-Alkyl- oder C₁-C₄-Alkoxy-Gruppen substituiert sein können, C₆-C₁₈-Aryl, C₆-C₁₈-Aryl-C₁-C₄-alkyl, wobei die Arylgruppen bis zu drei der folgenden
Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
(B) 99 bis 1 Gew.-% mindestens einer verbindung ausgewählt aus der Gruppe bestehend aus Acryl- und Methacrylsäure und C₁-C₂₀-Alkyl- und C₅-C₁₂-Cycloalkylester der Acryl- und Methacrylsäure
und
(C) 0 bis 98 Gew.-% mindestens eines weiteren, von A) und B) verschiedenen radikalisch polymerisierbaren Monomeren
und
(2) Umsetzung dieser Copolymerisate mit einer Verbindung der allgemeinen Formel II
R⁴NH₂ II
in der R⁴ Wasserstoff, C₁-C₂₂-Alkyl, C₅-C₈-Cycloalkyl, C₆-C₁₀-Aryl oder C₆-C₁₀-Aryl-C₁-C₄-alkyl bedeutet, wobei diese Reste, mit Ausnahme von Wasserstoff und der C₁-C₂₂-Alkyl-Reste, bis zu dreifach mit Resten, ausgewählt aus der Gruppe bestehend aus C₁-C₄-Alkyl, C₁-C₄-Alkoxy und Halogen, substituiert sein können, oder Mischungen davon, wobei das Gewichtsverhältnis der Copolymerisate (1) zu den Verbindungen (2) im Bereich von 1:1 bis 400:1 liegt.

2. Copolymerisate nach Anspruch 1, wobei das Monomerengemisch 5 bis 50 Gew.-% der Komponente A und 95 bis 50 Gew.-% der Komponente B enthält.

3. Copolymerisate nach Anspruch 1 oder 2, wobei das Monomere I 2,2'-[Oxybis(methylen)]bis-2-propensäure-dimethylester, 2,2'-[Oxybis(methylen)]bis-2-propensäure-dicyclohexylester, 2,2'-[Oxybis(methylen)]bis-2-propensäure-cyclolhexylester-2'-propensäure-methylester oder 2,2'-[Oxybis(methylen)]bis-2-propensäure-diphenylester ist.

4. Copolymerisate nach einem der Ansprüche 1 bis 3, mit Molekulargewichten von 80 000 bis 130 000 g/mol.

5. Verfahren zur Herstellung von Copolymerisaten nach Anspruch 1, dadurch gekennzeichnet, daß man
(1) ein Monomerengemisch aus
(A) 1 bis 99 Gew.-% mindestens eines Monomeren der allgemeinen Formel I
CH₂=C(E)CH₂-O-CH₂C(F)=CH₂ I
in der E und F ausgewählt sind aus der Gruppe aus - COOR¹, -COR¹, -CONRR³ und -CN, und R¹, R und R³ folgende Bedeutung haben:
R¹ = H, C₁-C₁₈-Alkyl, C₃-C₆-Cycloalkyl, C₃-C₆-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, Hydroxy-C₁-C₅-alkyl, Amino-C₁-C₅-alkyl, N-C₁-C₄-Alkyl-amino-C₁-C₅-alkyl, N,N-Di-(C₁-C₄-Alkyl)-amino-C₁-C₅-alkyl, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl) aminocarbonyl, Nitrilo, Nitro, Amino, C₁-C₄-Alkylamino, Di-(C₁-C₄-Alkyl)amino;
R, R³ = H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
(B) 99 bis 1 Gew.-% mindestens einer Verbindung ausgewählt aus der Gruppe bestehend aus Acryl- und Methacrylsäure und C₁-C₂₀-Alkyl- und C₅-C₁₂-Cycloalkylester der Acryl- und Methacrylsäure
und
(C) 0 bis 98 Gew.-% mindestens eines weiteren von A) und B) verschiedenen radikalisch polymerisierbaren Monomeren
der Polymerisation zuführt,
und
(2) die so erhaltenen Copolymerisate mit einer Verbindung der allgemeinen Formel II
R⁴NH₂ II
in der R⁴ Wasserstoff, C₁-C₂₂-Alkyl, C₅-C₈-Cycloalkyl, C₆-C₁₀-Aryl oder C₆-C₁₀-Aryl-C₁-C₄-alkyl bedeutet, wobei diese Reste, mit Ausnahme von Wasserstoff und der C₁-C₂₂-Alkyl-Reste, bis zu dreifach mit Resten, ausgewählt aus der Gruppe bestehend aus C₁-C₄-Alkyl, C₁-C₄-Alkoxy und Halogen, substituiert sein können, oder Mischungen davon,
zur Reaktion bringt, wobei das Gewichtsverhältnis der Copolymerisate (1) zu den Verbindungen (2) im Bereich von 1:1 bis 400:1 liegt.

6. Verwendung der Copolymerisate gemäß den Ansprüchen 1 oder 2 zur Herstellung von Formkörpern, Folien oder Fasern.

7. Formkörper, Folien oder Fasern, hergestellt aus Copolymerisaten gemäß den Ansprüchen 1 oder 2.

## Claims

1. A copolymer obtainable by
(1) copolymerizing a monomer mixture of
(A) from 1 to 99% by weight of at least one monomer of the formula I
CH₂=C(E)CH₂-O-CH₂C(F)=CH₂ I
where E and F are selected from the group consisting of -COOR¹, -COR¹, -CONRR³ and -CN,
R¹ is H, C₁-C₁₈-alkyl, C₃-C₈-cycloalkyl, C₃-C₈-cycloalkyl-C₁-C₅-alkyl, in which the cycloalkyl rings may be monosubstituted to trisubstituted by C₁-C₄-alkyl or C₁-C₄-alkoxy, or hydroxy-C₁-C₅-alkyl, amino-C₁-C₅-alkyl, N-C₁-C₄-alkylamino-C₁-C₅-alkyl, N,N-di-C₁-C₄-alkylamino-C₁-C₅-alkyl, C₆-C₁₈-aryl, C₆-C₁₈-aryl-C₁-C₄-alkyl, in which the aryl groups may carry up to three of the following groups: halogen, C₁-C₂₂-alkyl, C₁-C₄-alkoxy, carboxyl, C₁-C₄-alkoxycarbonyl, aminocarbonyl, C₁-C₄-alkylaminocarbonyl, di-C₁-C₄-alkylaminocarbonyl, nitrilo, nitro, amino, C₁-C₄-alkylamino or di-C₁-C₄-alkylamino and
R and R³ are each H, C₁-C₁₈-alkyl, C₃-C₈-cycloalkyl, C₃-C₈-cycloalkyl-C₁-C₅-alkyl, in which the cycloalkyl rings may be monosubstituted to trisubstituted by C₁-C₄-alkyl or C₁-C₄-alkoxy, or C₆-C₁₈-aryl or C₆-C₁₈-aryl-C₁-C₄-alkyl, in which the aryl groups may carry up to three of the following groups: halogen, C₁-C₂₂-alkyl, C₁-C₄-alkoxy, carboxyl, C₁-C₄-alkoxycarbonyl, aminocarbonyl, C₁-C₄-alkylaminocarbonyl, di-C₁-C₄-alkylaminocarbonyl, nitrilo, nitro, amino, C₁-C₄-alkylamino or di-C₁-C₄-alkylamino,
(B) from 99 to 1% by weight of at least one compound selected from the group consisting of acrylic and methacrylic acid and C₁-C₂₀-alkyl and C₅-C₁₂-cycloalkyl esters of acrylic and methacrylic acid
and
(C) from 0 to 98% by weight of at least one further monomer which differs from A) and B) and is capable of undergoing free radical polymerization
and
(2) reacting these copolymers with a compound of the formula II
R⁴NH₂ II
where R⁴ is hydrogen, C₁-C₂₂-alkyl, C₅-C₈-cycloalkyl, C₆-C₁₀-aryl or C₆-C₁₀-aryl-C₁-C₄-alkyl and these radicals, with the exception of hydrogen and C₁-C₂₂-alkyl, may be monosubstituted to trisubstituted by radicals selected from the group consisting of C₁-C₄-alkyl, C₁-C₄-alkoxy and halogen, or a mixture thereof, the weight ratio of the copolymer (1) to the compound (2) being from 1:1 to 400:1.

2. A copolymer as claimed in claim 1, in which the monomer mixture contains from 5 to 50% by weight of component A and from 95 to 50% by weight of component B.

3. A copolymer as claimed in claim 1 or 2, in which the monomer I is dimethyl 2,2'-[oxybis(methylene)]bis-2-propenoate, dicyclohexyl 2,2'-[oxybis (methylene)]bis-2-propenoate, cyclohexyl methyl 2,2'- [oxybis (methylene)]-bis-2'-propenoate or diphenyl 2,2'-[oxybis(methylene)]bis-2-propenoate.

4. A copolymer as claimed in any of claims 1 to 3, having a molecular weight of from 80,000 to 130,000 g/mol.

5. A process for the preparation of a copolymer as claimed in claim 1, wherein
(1) a monomer mixture of
(A) from 1 to 99% by weight of at least one monomer of the formula I
CH₂=C(E)CH₂-O-CH₂C(F)=CH₂ I
where E and F are selected from the group consisting of -COOR¹, -COR¹, -CONRR³ and -CN, and
R¹ is H, C₁-C₁₈-alkyl, C₃-C₈-cycloalkyl, C₃-C₈-cycloalkyl-C₁-C₅-alkyl, in which the cycloalkyl rings may be monosubstituted to trisubstituted by C₁-C₄-alkyl or C₁-C₄-alkoxy, or hydroxy-C₁-C₅-alkyl, amino-C₁-C₅-alkyl, N-C₁-C₄-alkylamino-C₁-C₅-alkyl, N,N-di-C₁-C₄-alkylamino-C₁-C₅-alkyl, C₆-C₁₈-aryl, C₆-C₁₈-aryl-C₁-C₄-alkyl, in which the aryl groups may carry up to three of the following groups: halogen, C₁-C₂₂-alkyl, C₁-C₄-alkoxy, carboxyl, C₁-C₄-alkoxycarbonyl, aminocarbonyl, C₁-C₄-alkylaminocarbonyl, di-C₁-C₄-alkylaminocarbonyl, nitrilo, nitro, amino, C₁-C₄-alkylamino or di-C₁-C₄-alkylamino and
R and R³ are each H, C₁-C₁₈-alkyl, C₃-C₈-cycloalkyl, C₃-C₈-cycloalkyl-C₁-C₅-alkyl, in which the cycloalkyl rings may be monosubstituted to trisubstituted by C₁-C₄-alkyl or C₁-C₄-alkoxy, or C₆-C₁₈-aryl or C₆-C₁₈-aryl-C₁-C₄-alkyl, in which the aryl groups may carry up to three of the following groups: halogen, C₁-C₂₂-alkyl, C₁-C₄-alkoxy, carboxyl, C₁-C₄-alkoxycarbonyl, aminocarbonyl, C₁-C₄-alkylaminocarbonyl, di-C₁-C₄-alkylaminocarbonyl, nitrilo, nitro, amino, C₁-C₄-alkylamino or di-C₁-C₄-alkylamino;
(B) from 99 to 1% by weight of at least one compound selected from the group consisting of acrylic and methacrylic acid and C₁-C₂₀-alkyl and C₅-C₁₂-cycloalkyl esters of acrylic and methacrylic acid
and
(C) from 0 to 98% by weight of at least one further monomer which differs from A) and B) and is capable of undergoing free radical polymerization is polymerized
and
(2) the copolymer thus obtained is reacted with a compound of the formula II
R⁴NH₂ II
where R⁴ is hydrogen, C₁-C₂₂-alkyl, C₅-C₈-cycloalkyl, C₆-C₁₀-aryl or C₆-C₁₀-aryl-C₁-C₄-alkyl and these radicals, with the exception of hydrogen and C₁-C₂₂-alkyl, may be monosubstituted to trisubstituted by radicals selected from the group consisting of C₁-C₄-alkyl, C₁-C₄-alkoxy and halogen, or a mixture thereof the weight ratio of the copolymer (1) to the compound (2) being from 1:1 to 400:1.

6. The use of a copolymer as claimed in claim 1 or 2 for the production of moldings, films or fibers.

7. A molding, film or fiber produced from a copolymer as claimed in claim 1 or 2.

## Revendications

1. Copolymères obtenus par
1) copolymérisation d'un mélange de monomères composé de
A) 1 à 99% en poids d'au moins un monomère de formule générale I
CH₂=C(E)CH₂-O-CH₂C(F)=CH₂ I
dans laquelle E et F sont choisis dans le groupe de -COOR¹, -COR¹, -CONRR³ et -CN, et R¹, R et R³ ont les significations suivantes:
R¹ = H, reste alkyle en C₁-C₁₈, cycloalkyle en C₃-C₈, (cycloalkyl en C₃-C₈)alkyle en C₁-C₅, les noyaux cycloalkyle pouvant être substitués jusqu'à trois fois par des groupements alkyle en C₁-C₄ ou alcoxy en C₁-C₄, hydroxyalkyle en C₁-C₅, aminoalkyle en C₁-C₅, N-(alkyl en C₁-C₄)aminoalkyle en C₁-C₅, N,N-di-(alkyl en C₁-C₄)aminoalkyle en C₁-C₅, aryle en C₆-C₁₈, (aryl en C₆-C₁₈)alkyle en C₁-C₄, les groupements aryle pouvant porter jusqu' à trois des groupements suivants: atomes d'halogène, alkyle en C₁-C₂₂, alcoxy en C₁-C₄, carboxy, (alcoxy en C₁-C₄)carbonyle, aminocarbonyle, (alkyl en C₁-C₄)aminocarbonyle, di-(alkyl en C₁-C₄)aminocarbonyle, nitrilo, nitro, amino, alkylamino en C₁-C₄, di-(alkyl en C₁-C₄)amino;
R,R³ = H, reste alkyle en C₁-C₁₈, cycloalkyle en C₃-C₈, (cycloalkyle en C₃-C₈)alkyle en C₁-C₅, les noyaux cycloalkyle pouvant être substitués jusqu'à trois fois par des groupements alkyle en C₁-C₄ ou alcoxy en C₁-C₄, aryle en C₆-C₁₈, (aryl en C₆-C₁₈)alkyle en C₁-C₄, les groupements aryle pouvant porter jusqu'à trois des groupements suivants: atomes d'halogène, alkyle en C₁-C₂₂, alcoxy en C₁-C₄, carboxy, (alcoxy en C₁-C₄)carbanyle, aminocarbonyle, (alkyl en C₁-C₄)aminocarbonyle, di-(alkyl en C₁-C₄)aminocarbonyle, nitrilo, nitro, amino, alkylamino en C₁-C₄, di-(alkyl en C₁-C₄)amine;
B) 99 à 1% en poids d'au moins un composé choisi dans le groupe constitué par les acides acrylique et méthacrylique et les esters alkyliques en C₁-C₂₀ et cycloalkyliques en C₅-C₁₂ des acides acrylique et méthacrylique
et
C) 0 à 98% en poids d'au moins un autre monomère susceptible de polymérisation radicalaire, différent de A) et B),
et
2) réaction de ces copolymères avec un composé de formule générale II
R⁴NH₂ II
dans laquelle R⁴ représente un atome d'hydrogène ou un reste alkyle en C₁-C₂₂, cycloalkyle en C₅-C₈, aryle en C₆-C₁₀ ou (aryl en C₆-C₁₀)alkyle en C₁-C₄, ces restes, à l'exception de l'atome d'hydrogène et des restes alkyle en C₁-C₂₂, pouvant être substitués jusqu'à trois fois par des restes choisis dans le groupe constitué par des restes alkyle en C₁-C₄, alcoxy en C₁-C₄ et des atomes d'halogène, ou avec des mélanges de ces composés,
le rapport pondéral des copolymères 1) aux composés 2) se situant dans la gamme de 1:1 à 400:1.

2. Copolymères selon la revendication 1, le mélange de monomères contenant 5 à 50% en poids du composant A) et 95 à 50% en poids du composant B).

3. Copolymères selon la revendication 1 ou 2, dans lesquels le monomère I est de l'ester diméthylique d'acide 2,2'-[oxybis(méthylène)]bis-2-propénoïque, de l'ester dicyclohexylique d'acide 2,2'-[oxybis(méthylène)]bis-2-propénoïque, de l'ester cyclohexylique d'acide 2,2'-[oxybis(méthylène)]bis-2-propénoïque-2'-ester méthylique d'acide propénoïque ou de l'ester diphénylique d'acide 2,2'-[oxybis(méthylène)]bis-2-propénoïque.

4. Copolymères selon l'une quelconque des revendications 1 à 3, ayant des poids moléculaires de 80 000 à 130 000 g/mole,

5. Procédé de préparation de copolymères selon la revendication 1, caractérisé en ce que
1) on soumet à la polymérisation un mélange de monomères composé de
A) 1 à 99% en poids d'au moins un monomère de formule générale I
CH₂=C(E)CH₂-O-CH₂C(F)=CH₂ I
dans laquelle E et F sont choisis dans le groupe de -COOR¹, -COR¹, -CONRR³ et -CN, et R¹, R et R³ ont les significations suivantes:
R¹ = H, reste alkyle en C₁-C₁₈, cycloalkyle en C₃-C₈, (cycloalkyl en C₃-C₈)alkyle en C₁-C₅, les noyaux cycloalkyle pouvant être substitués jusqu'à trois fois par des groupements alkyle en C₁-C₄ ou alcoxy en C₁-C₄, hydroxyalkyle en C₁-C₅, aminoalkyle en C₁-C₅, N-(alkyl en C₁-C₄)aminoalkyle en C₁-C₅, N,N-di-(alkyl en C₁-C₄)aminaalkyle en C₁-C₅, aryle en C₆-C₁₈, (aryl en C₆-C₁₈)alkyle en C₁-C₄, les groupements aryle pouvant porter jusqu'à trois des groupements suivants: atomes d'halogène, alkyle en C₁-C₂₂, alcoxy en C₁-C₄, carboxy, (alcoxy en C₁-C₄)carbonyle, aminocarbonyle, (alkyl en C₁-C₄)aminocarbonyle, di-(alkyl en C₁-C₄)aminocarbonyle, nitrilo, nitro, amino, alkylamino en C₁-C₄, di-(alkyl en C₁-C₄)amino;
R, R³ = H, reste alkyle en C₁-C₁₈, cycloalkyle en C₃-C₈, (cycloalkyle en C₃-C₈)alkyle en C₁-C₅, les noyaux cycloalkyle pouvant être substitués jusqu'à trois fois par des groupements alkyle en C₁-C₄ ou alcoxy en C₁-C₄, aryle en C₆-C₁₈, (aryl en C₆-C₁₈)alkyle en C₁-C₄, les groupements aryle pouvant porter jusqu'à trois des groupements suivants: atomes d'halogène, alkyle en C₁-C₂₂, alcoxy en C₁-C₄, carboxy, (alcoxy en C₁-C₄)carbonyle, aminocarbonyle, (alkyl en C₁-C₄)aminocarbonyle, di-(alkyl en C₁-C₄)aminocarbonyle, nitrilo, nitro, amino, alkylamino en C₁-C₄, di-(alkyl en C₁-C₄)amino;
B) 99 à 1% en poids d'au moins un composé choisi dans le groupe constitué par les acides acrylique et méthacrylique et les esters alkyliques en C₁-C₂₀ et cycloalkyliques en C₅-C₁₂ des acides acrylique et méthacrylique
et
C) 0 à 98% en poids d'au moins un autre monomère susceptible de polymérisation radicalaire, différent de A) et B),
et
2) on met en réaction les copolymères ainsi obtenus avec un composé de formule générale II
R⁴HN₂ II
dans laquelle R⁴ représente un atome d'hydrogène ou un reste alkyle en C₁-C₂₂, cycloalkyle en C₅-C₈, aryle en C₆-C₁₀ ou (aryl en C₆-C₁₀)alkyle en C₁-C₄, ces restes, à l'exception de l'atome d'hydrogène et des restes alkyle en C₁-C₂₂, pouvant être substitués jusqu'à trois fois par des restes choisis dans le groupe constitué par des restes alkyle en C₁-C₄, alcoxy en C₁-C₄ et des atomes d'halogène, ou avec des mélanges de ces composés,
le rapport pondéral des copolymères 1) aux composés 2) se situant dans la gamme de 1:1 à 400:1.

6. Utilisation des copolymères selon la revendication 1 ou 2 pour la fabrication de corps moulés, de feuilles ou de fibres.

7. Corps moulés, feuilles ou fibres, fabriqués à partir de copolymères selon la revendication 1 ou 2.
